# EUROPEAN PATENT SPECIFICATION

(11) **EP 2 461 966 B1**
(45) Date of publication and mention of the grant of the patent: **15.01.2014**
(21) Application number: 10754562.6
(22) Date of filing: 03.08.2010
(51) Int. Cl.: B29C 63/00, B31B 1/62, B31B 15/00, B32B 37/00

(54) **FEEDING APPARATUS FOR A PRODUCTION LINE OF SHEET COVERED CARDBOARD BOXES**
ZUFUHRVORRICHTUNG FÜR EINE FERTIGUNGSLINIE FÜR KARTONSCHACHTELN MIT DECKBLATT
APPAREIL D'ALIMENTATION POUR UNE CHAINE DE PRODUCTION DE BOITES EN CARTON COUVERTES PAR DES FEUILLES

(30) Priority: 07.08.2009 IT FI20090183
(43) Date of publication of application: 13.06.2012
(73) Proprietor: Europrogetti S.r.l., 53048 Sinalunga SI (IT)
(72) Inventor: BROCCOLINI, Giovanni, 52044 Cortona (Arezzo) (IT); SALETTI, Lamberto, 53049 Torrita di Siena (Siena) (IT)
(74) Representative: Soldatini, Andrea
(86) International application number: PCT/IB2010/053511
(87) International publication number: WO 2011/015988

(56) References cited:
- WO-A2-01/05902
- US-A- 5 501 062

## Description

The present invention concerns the field of the apparatus for forming and covering sheet-covered cardboard boxes.

### Background of the invention

As known, the forming of sheet covered cardboard boxes is carried out on automatic productive lines which comprise different stations in which there are arranged respective working apparatus; a typical production line comprises a gluing apparatus for pre-gluing the covering paper sheets, an erecting apparatus for forming a cardboard box and joining the corners of the erected box starting from a flat pre-cut blank, a centering apparatus for centering the box with respect to the pre-glued sheet, and a covering apparatus which arranges the pre-glued sheet all over the box, completing the covering step.

When the erected box is centered and made to adhere with its own base to the pre-glued sheer, in a step that then precedes the actual covering step, one can frequently notice, especially in case of large size boxes, the phenomenon of the formation of air blisters, trapped between the covering sheet and the base of the box. It is a seriously unaesthetic defect that also compromises the resistance of the covering.

Presently, between the centering and the covering apparatus, the assembly of the box and the pre-glued sheet placed beneath, passes along an intermediate passage area over a transportation apparatus in which it is subject to the action of a pressure member that, pressing the box from above, aims at improving the adhesion to the sheet. However, said action has rather the object of preventing a detachment of the sheet when the box is fed to the covering apparatus, than having a real effect on the blistering phenomenon.

In fact, the pressure is generally exerted on the top edges of the box, and is therefore transmitted via the side walls mainly on the periphery of the base, improving the localized adhesion, but not preventing the trapping of air in the central zone. The use of pressing member working on the inside of the box, directly over the inner side of the base, has been also proposed, but this solution, as such, has not proven to be effective.

One is therefore forced to use workers who with manual action, immediately at the exit of the box from the production line (with this, trying to advance the complete drying of the glue), try to minimize the problem by "stretching" the covering sheet in order to dissolve the blisters. But even with this additional labour costs, a satisfactory result may not be obtained, because depending on the shape and size of the box, and on the material of which the sheet is made (a material that can have a higher or lower permeability to the air), the manual action may nonetheless have an ineffective outcome.

### Summary of the invention

The object of the present invention is to provide an apparatus to be used in the above described production step, that permits to solve the problem of the formation of blisters on the sheet covering of the base of the box, whatever the material of the covering sheet is, without requiring additional labour for supplementary manual operations, all with simple and relatively cheap constructive elements which can be easily built in with the traditional structure of the line without interfering with the other functions of the same line.

According to the present invention, these and other objects are attained by the apparatus the essential features of which are defined by the first of the appended claims.

### Brief description of the drawings

The characteristics and advantages of the apparatus according to the present invention will be apparent from the following description of embodiments thereof, given as a non-limiting example with reference to the attached drawings, wherein:
- figure 1 is a perspective view of the apparatus in a first embodiment of the invention;
- figure 2 is a longitudinal section view of the apparatus of figure 1, with parts omitted for the sake of clarity;
- figure 3 is a transverse section view of the apparatus of the previous figures, again with parts omitted;

- figure 4 is a perspective view of the apparatus in a second embodiment of the invention, in a start or first step of a box covering productive cycle;
- figures 5 and 6 show the apparatus of figure 4, in an analogous perspective view, respectively in a second and in a third step of the productive cycle;
- figure 7 is a longitudinal section view of the apparatus in the second embodiment, depicted in a fourth step of the productive cycle;
- figure 8 represents the second embodiment of the apparatus, again in a perspective view, in a fifth step of the productive cycle, with figure 8a that enlarges a particular of a sensor device;
- figures 9 and 10 show, again in a longitudinal section view, the same apparatus respectively in a sixth and in a seventh step of the productive cycle.

### Detailed description of the invention

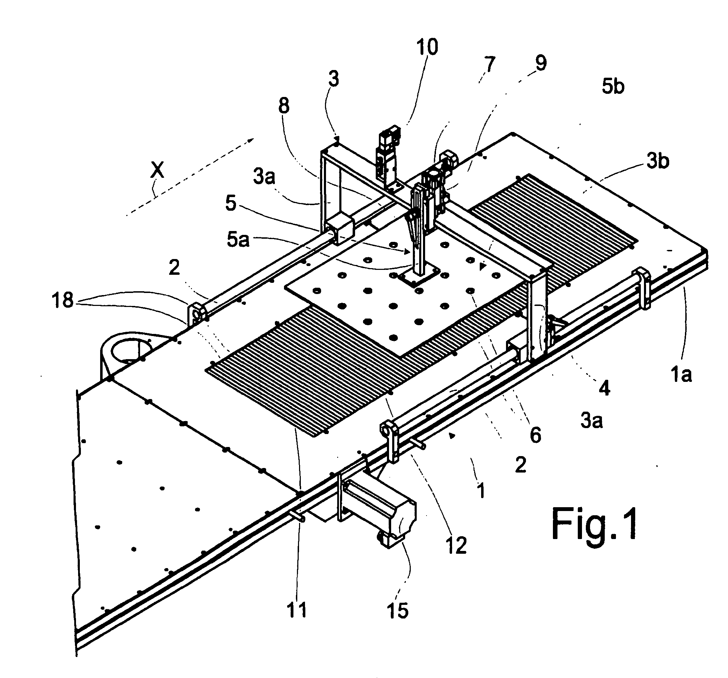

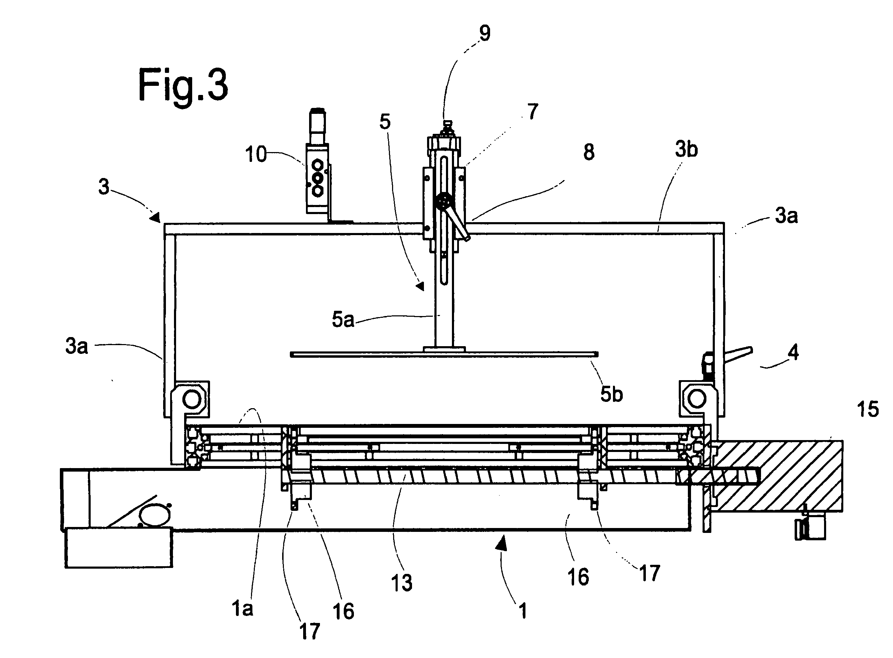

With reference to figures 1 to 3, the apparatus according to a first, simplified embodiment of the invention comprises a conveyor frame 1 defining a top support plane 1a, integrated as in the known art with a suction system, not represented nor described, retaining the pre-glued sheet being worked, lying on the plane 1a and in turn not represented. Over the sheet the previously erected box is arranged; such an assembly comes from the centering apparatus and is directed towards the covering apparatus. The horizontal support plane 1a comprises therefore a perforated laminar structure, in order to let the suction flow pass. The suction is exerted by a system not shown in these figures. The plane 1 a is lined with a belt made of a material such as rubberised cloth (with micro perforations), in turn not represented.

The frame 1 has an elongated development according to a direction X, corresponding to the feeding direction of the assembly (erected box to be erected and covering sheet) being worked. Along two sides parallel with the direction X respective guides 2 extend for supporting a portal 3 above the frame 1. In particular, two side uprights 3a of the portal 3 slidably engage, at the base, with the guides 2 so as to allow for the displacement along the direction X, while a locking device 4 is arranged with at least one of the uprights to secure it with respect to the relative guide, when the portal has reached the desired position. Such position must in fact be adapted to the size of the boxes being erected and covered.

The portal 3 is completed by a crosspiece 3b which centrally supports a pressing member 5 comprising a stem 5a, arranged orthogonal with the plane 1a and vertically displaceable, and a plate 5b integral with the lower end of the stem 5a and arranged parallel with the plane 1a. The plate 5b is sized so as to reproduce the outline of the base of the box, or more precisely it has slightly lower dimensions with respect to the same base, so as to permit the penetration into the box for being pressed against the base. The plate 5b may have holes 6 for lightening the structure and for the discharge of air, and is lined, over the lower face, by a soft elastic material, not represented in the figures, such as foam rubber or the like.

The stem 5a is slidably supported by a guide unit 7, which permits an easy replacement of the whole pressing member 5, as well as the adjustment of the position in height, also in this case with the assistance of a locking device 8. The guide unit 7 is then driven è with a reciprocating vertical motion, in order to perform the required pressing action, by a linear pneumatic actuator 9, with a relative control valve 10, operating and controlled according to known techniques, not described in detail.

Turning to the main aspect of the invention, the plane 1 a has a wide window 11 (figure 1) through which a movable band 12 operates by performing a smoothing action over the covering sheet on the base of the box. In greater detail, the band 12 is housed inside the frame 1 and develops according to a closed loop path between two shafts 13 e 14, arranged respectively upstream and downstream of the window 11 in a transverse fashion with respect to the feeding direction of the assembly sheet-box. One of the shaft, e.g. the upstream shaft 13, is motorized thanks to a motor reducer 15 projecting outwards from a side of the frame 1.

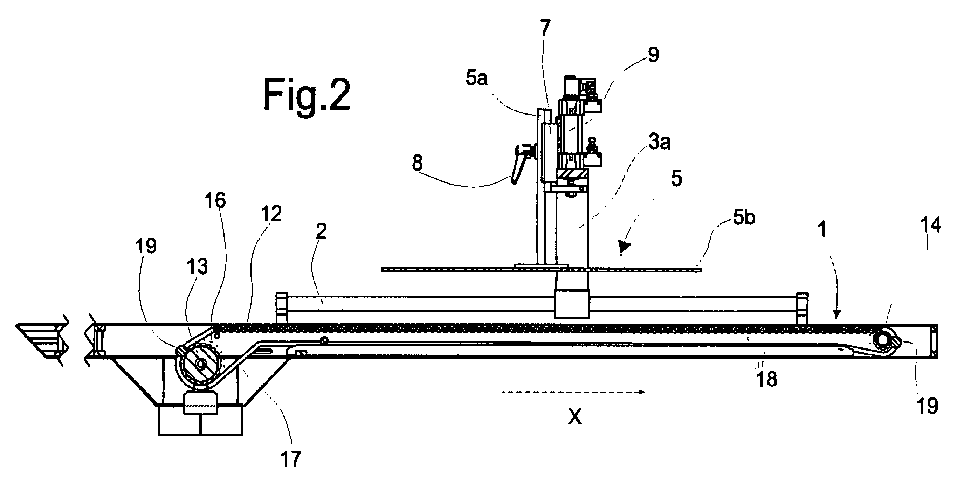

Via geared transmissions 16, the shaft 13 transmits the motion to two side chains 17, running between the two shafts along the longitudinal sides of the frame 1, sideways with respect to the window 11. In order to comply with construction requirements, the motorized shaft 13 may be arranged in a downwards displaced position, known or obvious systems being further provided for guiding/deviating the chains according to the needs. The two chains 17 are then mutually joined by a plurality of rolls 18, idling around their own respective axes. In practice, the rollers 18 define and materialize the working surface of the band 12. The rolls 18 are depicted in figure 2 only partially, in the upper segment of the band arranged substantially coplanar with the plane 1 a, whereas the lower or return segment runs encased at the inside of frame 1.

Among the rolls 18 there is however at least one smoothing roll 19 (figure 2), preferably two as in the depicted embodiment, having an increased width than the other rolls, and possibly a slightly ovalized cross section. The smoothing roll or rolls 19 are thus adapted to project out of the window 11 to smoothen or - one might say - straighten out the sheet over the base of the box removing the air blisters possibly formed, as the band 12 is carried into motion by the motor reducer 15. The provision of two rolls 19 in poles apart fashion ensures that two smoothing passages are carried out with a single rotation cycle of the band 12. In this way, two subsequent and consecutive boxes can be smoothened (a single passage for each box) without the necessity of inverting the motion and consequent slowering or reductions of the productivity.

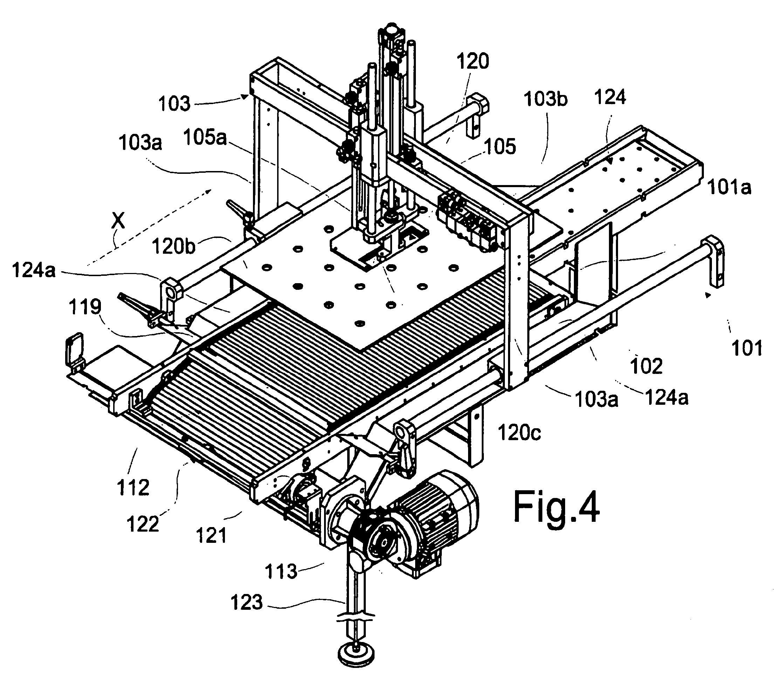

With reference no to figures 4 to 10, a second, more advanced embodiment of the invention will be described hereafter only as far as the elements significantly different from the first embodiment are concerned. The components that are the same or equivalent to those of the previous embodiment are in any case denoted by corresponding numerals. The operation of the apparatus will then be described in greater detail with the support of this second embodiment, being it clear that the relevant explanations will be valid and applicable with minor variations to the (first) simplified embodiment.

In the second embodiment, besides to a first pressing member 105 with a plate 105b analogous to the first embodiment, a second pressing member 120 is also provided, having a plate 120b which overhangs the plate 105b of the first pressing member and has greater size so as to be adapted to abut not against the base of the box but rather against the top side of the same box. The two pressing members are functionally independent and to this purpose stems 105a of the first member are arranged sideways to a stem 120a of the second member, passing through an opening 120c formed in the second plate 120b of the second pressing member, to support their own plate 105b below the same second plate. The constructive solutions for mounting and reciprocating the two pressing members, and namely the relevant stems, are according to design criteria that are, as such, obvious to a skilled person, and in any case alike what already described for the first embodiment.

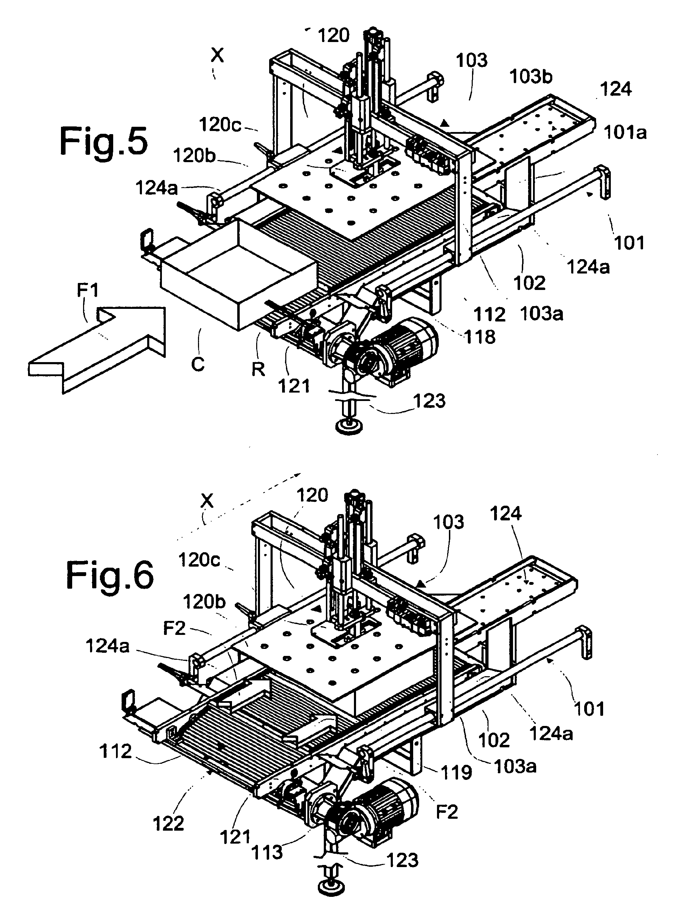

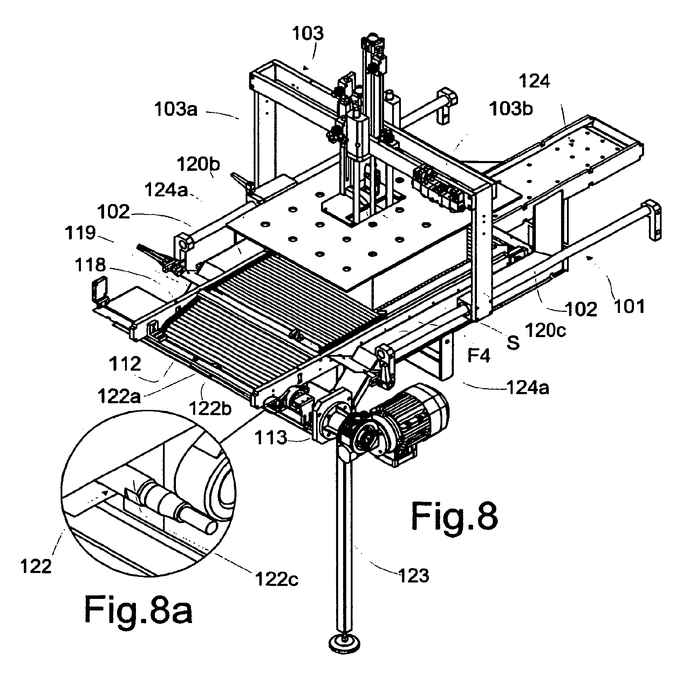

Moreover, it can be noticed in the figures a photoelectric sensor 121 adapted to detect the presence of a box entering the band 112. In figure 5, above and beyond a box S, the sensor at work can be seen as symbolized by the indication of a light beam R. As it can be appreciated in particular thanks to the enlarged view of figure 8a, there is also a detector 122 for the detecting the passage/position of the two wider rolls 119, arranged substantially in correspondence with the upstream driving shaft 113, and therefore along the box entrance side of the band 112. The detector 122 comprises a feeler wheel 122a supported so as to be displaceable in response to the passage of a wider roll 119. The displacement is transmitted to a hinged system 122b having an end portion which is correspondingly translated at a side of the plane 101 a. Such translation is red by a sensor 122c.

A stiffening foot 123, integral with frame 101 and adapted to abut on the ground, is provided for making the same frame more stable. Finally, in the drawings referring to this embodiment, there is also represented the already mentioned suction system 124 that, due to the presence of the band 112, is in this case bifurcated in a couple of channels 124a running externally along the longitudinal sides of the frame 101.

In operation, the apparatus working in a "deblistering" mode passes through the following working steps. At the start of the cycle (figure 4) both pressing member are lifted in a rest position, and a run of the band is started until the feeler 122 detects the presence of either of the two wider rolls 119 on the box entrance side of the band.

When the box/sheet assembly C comes to be worked (figure 5, arrow F1), the same box is "read" by the photoelectric sensor 121. The positive detection activates the actual start of the deblistering cycle. Thanks to the sensor, being it known the speed of the conveyor belt, the length of the box - that is, its size measured along the feeding direction X - becomes known from the time duration of the positive presence detection by the same sensor.

The box proceeds with its run (figure 6, arrows F2) until it stops in the working area of the pressing members. In the meantime, as soon as the passage of the box in front of the photoelectric sensor 121 had been completed, the band 112 had been set into motion at a synchronous speed with respect to the speed of the conveyor belt, by this making one of the wider rolls 119 "chases" the box, in the immediate proximity of the rear corner of the box, that is the upstream base corner taking the feeding direction as a reference.

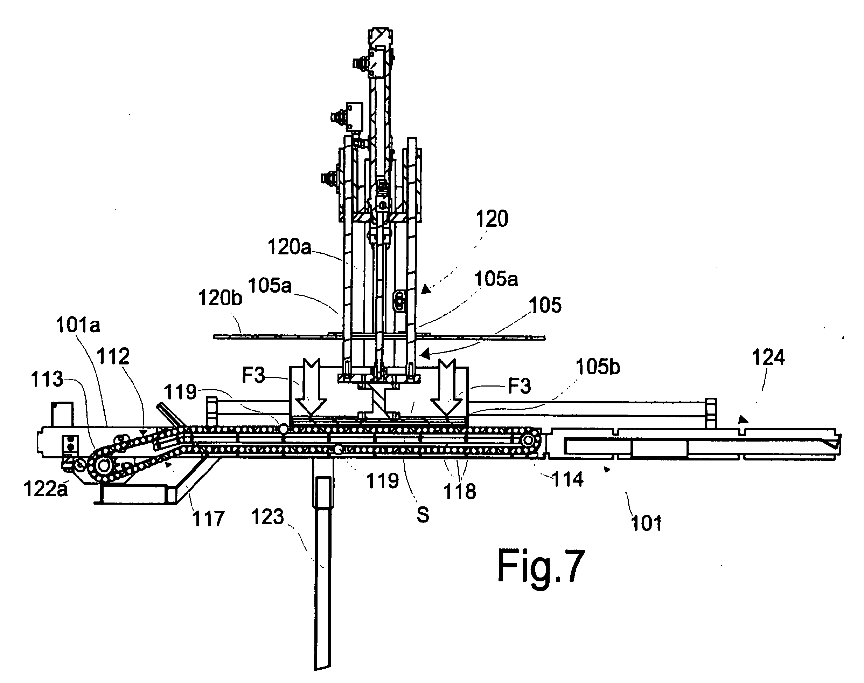

As the conveyor belt and at the same time also the band 112 stop, the first pressing member 105 (or the only pressing member of the first embodiment) is lowered on the base of the box (figure 7, arrows F3), with the rolls 118 that provide for the adequate support and opposition to the action of plate 105b.

At this point the band 112 is again set into motion (figure 8, arrows F4) making the smoothing roll 119 previously resting along the rear side of the box, slide from this side over the whole surface of the base so as to carry out the desired squeezing action for a perfect stretching of the sheet avoiding the formation of the blisters. The movement stops when the feeler 122 detects the presence at the entrance side of the other smoothing roll (i.e. the one inactive in the cycle presently considered).

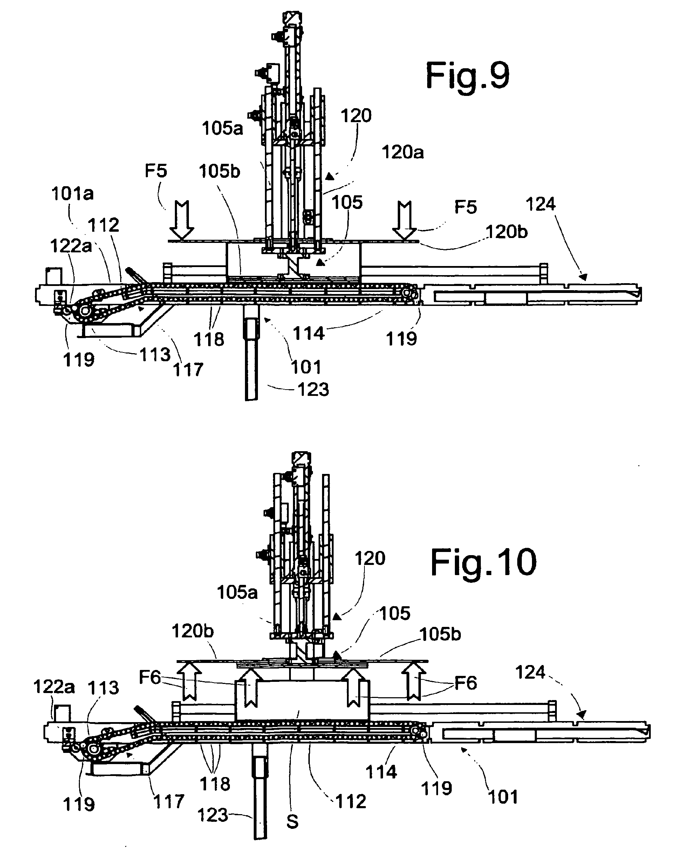

However, when the active roll has completed the smoothening step, the control system learns it thanks to the previously detected knowledge of the length of the box (being it known also the working speed of the band). As the passage of the roll is completed, the lowering of the second pressing member 120 is then driven (figure 9, arrows F5), so as to press on the top edges of side walls of the box forcing the base corners against the conveyor belt for a pre-set time, and performing in this way a sealing effect all along the periphery of the base to improve the adhesion of the glue and avoid that the air just expelled may get back in.

Finally (figure 10, arrows F6), both the pressing members are lifted up, allowing for the already worked box to be conveyed towards the covering apparatus, and the entrance of a new box to be worked. The cycle will be repeated every time a new box passing is detected. If the work time of a cycle exceeds a certain time limit, the cycle will be blocked and an alarm signal will be emitted causing a stop of the entire line. All the above mentioned working steps are clearly controlled by a control system the features of which will appear obvious, and readily reducible in practice for a skilled person. It will also be provided for the possibility of manual drive controls, disabling the automatic mode, to be used mainly in test or maintenance circumstances.

According to the invention, an effective solution to the problem of the formation of blisters is then attained, doing away with the necessity of recurring to supplementary labour and with no significant construction complications. The fact that the box is worked immediately after the centering step, and thus with the glue still in a wet condition, ensures an optimum result of the procedure. The traditional structure of the frame 1 and its operation are not in any ways affected by the provision of the band with the smoothing rolls, which works in a synergic combination with the pressing system acting from above. The conveyor belt that surrounds the frame as in the known art, obstructs the window but is deformable so as to let the projecting smoothing roll(s) carry out their task.

With the construction as in the second embodiment, the two pressing elements work synergically to further improve the effectiveness of the result. Moreover, the apparatus can operate with the second pressing member only, and then also in a traditional mode, by simply demounting the first pressing member 105. In this operation mode the roll band 112 remains inactive and the second pressing member 120 presses over the edges of every box below, resting in a standstill position, as in the known systems.

The band can clearly adopt different configurations from the one shown and described above, which in any case is to be considered as preferable for the effectiveness with which it can meet the various needs (minimizing the friction, obstruction of the window without compromising the permeability to air, light weight). The invention indeed encompasses a feeding apparatus including any type of band carrying at least a smoothing member or members adapted to project and push the base of the box moving from a side to the opposite one, even not necessarily in accordance with the feeding direction X.

In fact, the present invention has been here described with reference to preferred embodiments, but it should be understood that there may be other embodiments within the same inventive concept, as defined by the scope of protection of the following claims.

## Claims

1. A feeding apparatus for feeding along a feeding direction (X) an assembly of a box comprising a base and of a pre-glued sheet arranged in adhesion under said base, said apparatus comprising a frame (1) defining a plane (1a) for supporting and conveying said assembly, and pressing means (5, 105, 120) reciprocating in a direction orthogonal with said plane (1a) for pushing said assembly towards said plane (1a), and control means for controlling the operation of said pressing means (5, 105, 120), **characterized in that** smoothing means (12, 112) are provided on said plane, said smoothing means comprising at least one smoothing element (19) adapted to project from said plane (1a,101a) and to move over said sheet contacting it with the opposition of said pressing means (5, 105, 120), said smoothing means being controlled by said control means in a coordinated manner with respect to said pressing means.

2. The apparatus according to claim 1, wherein said smoothing element (19) is an elongated element which extends orthogonally to said direction (X) and is movable along with said direction (X) projecting through a window (11) formed in said plane (1a) and obstructed by said smoothing means (12, 112).

3. The apparatus according to claim 1 or 2, wherein said smoothing means (12) comprises a movable continuous band (12,112) housed within said frame (1, 101) and developing in a closed loop with an upper segment translating on said plane (1a, 101a).

4. The apparatus according to claim 3, wherein said band (12) comprises a plurality of rolls (18, 19, 118, 119) close to each other, said smoothing element consisting of at least one roll (19, 119) having an increased width with respect to the other rolls (18).

5. The apparatus according to claim 4, wherein said at least one smoothing roll (19, 119) has an oval cross section.

6. The apparatus according to claim 4 or 5, wherein said rolls (18, 118) comprising said at least one smoothing roll (19, 119) are arranged with their own axis orthogonal with said feeding direction (X) and placed close to each other side by side along the same direction (X).

7. The apparatus according to claim 6, wherein said rolls (18, 118, 19, 119) are supported among a couple of chains (17, 117) developing between two shafts (13, 113 14, 114) arranged transversally to said feeding direction (X), respectively upstream and downstream of said window (11), one of said shafts being motorized.

8. The apparatus according to any of the claims from 4 to 7, wherein said band (12, 112) comprises two smoothing rolls (19, 119) arranged poles apart.

9. The apparatus according to any of the previous claims, wherein said pressing means comprise a first pressing member (5, 105) with a plate (5b, 105b) adapted to be inserted within said box for pressing directly the base of the box.

10. The apparatus according to claim 9, wherein said pressing means comprise a second pressing member (120) with a plate (120b) having an increased size with respect to the plate (105b) of said first pressing member (105) and adapted to press the top edges of the side walls of said box, namely at least for a period of time subsequent to a disengagement of said smoothing means from said box, said first and second pressing members being adapted to be driven independently from each other.

11. The apparatus according to claim 10, wherein said plate (105b) of said first pressing member (105) is supported below said plate (120b) of said second pressing member (120), via support means passing through an opening (120c) formed in said plate (120b) of said second pressing member (120).

12. The apparatus according to claim 10 or 11, wherein said plate (5b, 105b) of said pressing member (105) and said plate (120b) of said second pressing member (120) are integral with the lower ends of respective stems (5a, 105a, 120a) supported so as to be driven in a reciprocating manner by a crossbar (3b, 103b) of a portal (3, 103) above said frame (1, 101).

13. The apparatus according to claim 12, wherein said portal (3, 103) comprises uprights (3a, 103a) slidably supported at the base by guides (2, 102) running along the sides of said frame (1, 101) parallel with said direction (X), so as to allow for a position adjustment of said portal (3, 103) along said direction (X).

14. The apparatus according to any of the claims from 3 to 13, comprising sensor means (121) adapted to detect the presence and the length of a box entering said plane (1a, 101 a), said control means being adapted to control at least the operation of said band in response to an output signal emitted by said sensor means.

15. The apparatus according to any of the claims from 4 to 14, wherein said at least one wider roll (119) of said band (112) has an axial end portion (119a) projecting sideways so as to be adapted to cooperate with feeler detection means (122) arranged in proximity to an entrance side of said box over said band (112) and adapted to detected the passage of a smoothing roll (119), said control means being adapted to control at least the operation of said band in response to an output signal emitted by said detection means (122).

16. The apparatus according to claim 15, wherein said control means are adapted to drive said band (12, 112) starting from a positive detection of a passage of a smoothing roll by said detection means (122) so as said smoothing roll (19, 119) chases the box along a rear side thereof.

17. The apparatus according to any of the previous claims, wherein said frame (101) comprises a suction system (124) adapted to perform a suction through said plane (101a), said system comprising a pair of channels (124a) running externally along the sides of said frame (101).

## Patentansprüche

1. Zuführvorrichtung, um längs einer Zuführrichtung (X) eine Anordnung aus einer Schachtel, die eine Basis enthält, und aus einem vorverklebten Blatt zuzuführen, das unter der Basis anhaftend angeordnet ist, wobei die Vorrichtung einen Rahmen (1), der eine Ebene (1a) definiert, um die Anordnung zu halten und zu befördern, und Drückeinrichtungen (5, 105, 120), die in einer Richtung orthogonal bezüglich der Ebene (1a) hin und her gehen, um die Anordnung zu der Ebene (1a) hin zu drücken, und Steuereinrichtungen enthält, um den Betrieb der Drückeinrichtungen (5, 105, 120) zu steuern, **dadurch gekennzeichnet, dass** Glättungseinrichtungen (12, 112) auf der Ebene vorgesehen sind, wobei die Glättungseinrichtungen wenigstens ein Glättungselement (19) enthalten, das ausgelegt ist, um von der Ebene (1a, 101a) vorzustehen und sich über das Blatt zu bewegen, um es mit dem Gegenüber der Drückeinrichtungen (5, 105, 120) in Kontakt zu bringen, wobei die Glättungseinrichtungen von den Steuereinrichtungen in einer koordinierten Weise bezüglich den Drückeinrichtungen gesteuert werden.

2. Vorrichtung nach Anspruch 1, wobei das Glättungselement (19) ein längliches Element ist, das sich orthogonal zu der Richtung (X) erstreckt und längs bezüglich der Richtung (X) beweglich ist, durch ein Fenster (11) vorstehend, das in der Ebene (1a) ausgebildet ist und von den Glättungseinrichtungen (12, 112) versperrt ist.

3. Vorrichtung nach Anspruch 1 oder 2, wobei die Glättungseinrichtungen (12) ein bewegliches kontinuierliches Band (12, 112) enthalten, das innerhalb des Rahmens (1, 101) untergebracht ist und in einer geschlossenen Schleife mit einem oberen Segment auf der Ebene (1a, 101a) übertragend verläuft.

4. Vorrichtung nach Anspruch 3, wobei das Band (12) eine Mehrzahl von Rollen (18, 19, 118, 119) nahe beieinander enthält, wobei das Glättungselement aus wenigstens einer Rolle (19, 119) besteht, die eine vergrößerte Breite bezüglich den anderen Rollen (18) hat.

5. Vorrichtung nach Anspruch 4, wobei die wenigstens eine Glättungsrolle (19, 119) einen ovalen Querschnitt hat.

6. Vorrichtung nach Anspruch 4 oder 5, wobei die Rollen (18, 118), die die wenigstens eine Glättungsrolle (19, 119) enthalten, mit ihrer eigenen Achse orthogonal bezüglich der Zuführrichtung (X) angeordnet sind und nahe beieinander Seite an Seite längs derselben Richtung (X) platziert sind.

7. Vorrichtung nach Anspruch 6, wobei die Rollen (18, 19, 118, 119) zwischen einem Paar von Ketten (17, 117) gehalten sind, die zwischen zwei Wellen (13, 113, 14, 114) verlaufen, die transversal zu der Zuführrichtung (X) angeordnet sind, jeweils stromaufwärts und stromabwärts des Fensters (11), wobei eine der Wellen motorisiert ist.

8. Vorrichtung nach einem der Ansprüche 4 bis 7, wobei das Band (12, 112) zwei Glättungsrollen (19, 119) enthält, die weit voneinander getrennt angeordnet sind.

9. Vorrichtung nach einem der vorhergehenden Ansprüche, wobei die Drückeinrichtungen ein erstes Drückglied (5, 105) mit einer Platte (5b, 105b) enthalten, die ausgelegt ist, um innerhalb der Schachtel eingesetzt zu werden, um direkt auf die Basis der Schachtel zu drücken.

10. Vorrichtung nach Anspruch 9, wobei die Drückeinrichtungen ein zweites Drückglied (120) mit einer Platte (120b) enthalten, die bezüglich der Platte (105b) des ersten Drückgliedes (105) eine vergrößerte Größe hat und ausgelegt ist, um auf die oberen Ränder der Seitenwände der Schachtel zu drücken, d.h. wenigstens für eine Zeitperiode nachfolgend auf ein Freigeben der Glättungseinrichtungen von der Schachtel, wobei die ersten und zweiten Drückglieder ausgelegt sind, um unabhängig voneinander betrieben zu werden.

11. Vorrichtung nach Anspruch 10, wobei die Platte (105b) des ersten Drückgliedes (105) unter der Platte (120b) des zweiten Drückgliedes (120) über Halteeinrichtungen gehalten ist, die durch eine Öffnung (120c) hindurch gehen, die in der Platte (120b) des zweiten Drückgliedes (120) ausgebildet ist.

12. Vorrichtung nach Anspruch 10 oder 11, wobei die Platte (5b, 105b) des Drückgliedes (105) und die Platte (120b) des zweiten Drückgliedes (120) integral mit den unteren Enden jeweiliger Schäfte (5a, 105a, 120a) sind, die, um in einer hin und her gehenden Weise angetrieben zu werden, durch eine Querstange (3b, 103b) eines Portals (3, 103) oberhalb des Rahmens (1, 101) gehalten sind.

13. Vorrichtung nach Anspruch 12, wobei das Portal (3, 103) Ständer (3a, 103a) die an der Basis durch Führungen (2, 102) verschiebbar gehalten sind, die längs den Seiten des Rahmens (1, 101) parallel zu der Richtung (X) verlaufen, um eine Positionseinstellung des Portals (3, 103) längs der Richtung (X) zu gestatten.

14. Vorrichtung nach einem der Ansprüche 3 bis 13, enthaltend Sensoreinrichtungen (121), die ausgelegt sind, um das Vorhandensein und die Länge einer Schachtel zu detektieren, die in die Ebene (1a, 101a) eintritt, wobei die Steuereinrichtungen ausgelegt sind, um wenigstens den Betrieb des Bandes in Abhängigkeit von einem Ausgangssignal zu steuern, das von den Sensoreinrichtungen emittiert wurde.

15. Vorrichtung nach einem der Ansprüche 4 bis 14, wobei die wenigstens eine breitere Rolle (119) des Bandes (112) ein axiales Endteil (119a) hat, das seitlich vorsteht, um ausgelegt zu sein, um mit Messdetektionseinrichtungen (122) zusammenzuwirken, die nahe einer Eingangsseite der Schachtel über dem Band (112) angeordnet sind und ausgelegt sind, um den Durchgang einer Glättungsrolle (119) zu detektieren, wobei die Steuereinrichtungen ausgelegt sind, um wenigstens den Betrieb des Bandes in Abhängigkeit von einem Ausgangssignal zu steuern, das von den Detektionseinrichtungen (122) emittiert wurde.

16. Vorrichtung nach Anspruch 15, wobei die Steuereinrichtungen ausgelegt sind, um das Band (12, 112) beginnend mit einer positiven Detektion eines Durchgangs einer Glättungsrolle durch die Detektionseinrichtungen (122) zu betreiben, so wie die Glättungsrolle (19, 119) die Schachtel längs einer Rückseite davon verfolgt.

17. Vorrichtung nach einem der vorhergehenden Ansprüche, wobei der Rahmen (101) ein Saugsystem (124) enthält, das ausgelegt ist, um ein Saugen durch die Ebene (101a) auszuführen, wobei das System ein Paar von Kanälen (124a) enthält, die extern längs den Seiten des Rahmens (101) verlaufen.

## Revendications

1. Un appareil d'alimentation pour alimenter selon une direction d'alimentation (X) un ensemble d'une boîte comprenant un fond et d'une feuille préencollée prévue pour adhérer sous ledit fond, ledit appareil comprenant un cadre (1) définissant un plan (1a) pour soutenir et convoyer ledit ensemble, et des moyens de pression (5, 105, 120) aptes à agir de façon alternative dans une direction orthogonale au dit plan (1a) pour pousser ledit ensemble vers ledit plan (1a), et des moyens de commande pour commander le fonctionnement des dits moyens de pression (5, 105, 120), **caractérisé en ce que** des moyens de lissage (12, 112) sont prévus sur ledit plan, lesdits moyens de lissage comportant au moins un élément de lissage (19) adapté pour dépasser du dit plan (1 a, 101 a) et pour se déplacer au-dessus de ladite feuille entrant en contact avec lui en opposition aux dits moyens de pression (5, 105, 120), lesdits moyens de lissage étant commandés par lesdits moyens de commande en synchronisation avec lesdits moyens de pression.

2. L'appareil selon la revendication 1, où ledit élément de lissage (19) est un élément oblong qui s'étend orthogonalement à ladite direction (X) et qui est mobile le long de ladite direction (X) en passant à travers une fenêtre (11) formée dans ledit plan (1a) et obstruée par lesdits moyens de lissage (12, 112).

3. L'appareil selon l'une des revendications 1 et 2, où lesdits moyens de lissage (12) comprennent une bande continue mobile (12, 112) logée dans ledit cadre (1, 101) et formant une boucle fermée avec une partie supérieure se translatant sur ledit plan (1 a, 101 a).

4. L'appareil selon la revendication 3, où ladite bande (12) comprend une pluralité de rouleaux (18, 19, 118, 119) proches les uns des autres, ledit l'élément de lissage se composant d'au moins un rouleau (19, 119) ayant une largeur plus grande que les autres rouleaux (18).

5. L'appareil selon la revendication 4, où ledit au moins un rouleau (19, 119) a une section transversale ovale.

6. L'appareil selon l'une des revendications 4 et 5, où lesdits rouleaux (18, 118) comprenant ledit au moins un rouleau de lissage (19, 119) sont agencés de façon que leurs axes soient orthogonaux à ladite direction d'alimentation (X) et placés proches les uns des autres, côte à côte, le long de la même direction (X).

7. L'appareil selon la revendication 6, où lesdits rouleaux (18, 118, 19, 119) sont soutenus par un couple de chaînes (17, 117) se déroulant entre deux arbres (13, 113, 14, 114) disposés transversalement à ladite direction d'alimentation (X), respectivement en amont et en aval de ladite fenêtre (11), l'un des dits arbres étant motorisé.

8. L'appareil selon l'une quelconque des revendications 4 à 7, où ladite bande (12, 112) comprend deux rouleaux de lissage (19, 119) positionnés aux pôles opposés.

9. L'appareil selon l'une quelconque des revendications précédentes, où lesdits moyens de pression comprennent un premier élément de pression (5, 105) avec une plaque (5b, 105b) adaptée pour être insérée dans ladite boîte et pour appuyer directement sur le fond de la boîte.

10. L'appareil selon la revendication 9, où lesdits moyens de pression comportent un second élément de pression (120) avec une plaque (120b) ayant une dimension plus grande que la plaque (105b) du dit premier élément de pression (105) et adaptée pour appuyer sur les bords supérieurs des parois latérales de ladite boîte, notamment au moins pendant une période de temps subséquente à un désengagement des dits moyens de lissage, de ladite boîte, lesdits premier et second éléments de pression étant adaptés pour être actionnés indépendamment l'un de l'autre.

11. L'appareil selon la revendication 10, où ladite plaque (105b) du dit premier élément de pression (105) est maintenue en dessous de ladite plaque (120b) du dit second élément de pression (120), par l'intermédiaire de moyens de support passant à travers une ouverture (120c) formée dans ladite plaque (120b) du dit second élément de pression (120).

12. L'appareil selon l'une des revendications 10 et 11, où ladite plaque (5b, 105b) du dit premier élément de pression (105) et ladite plaque (120b) du dit second élément de pression (120) sont solidaires des extrémités inférieures de tiges respectives (5a, 105a, 120a) maintenues de façon à être actionnées de façon alternative par une barre transversale (3b, 103b) d'un portique (3, 103) au-dessus du dit cadre (1, 101).

13. L'appareil selon la revendication 12, où ledit portique (3, 103) comprend des montants (3a, 103a) montés à leur base de façon coulissante sur des guides (2, 102) s'étendant le long des côtés du dit cadre (1, 101) parallèles à ladite direction (X), afin de permettre un ajustement de la position du dit portique (3, 103) le long de ladite direction (X).

14. L'appareil selon l'une quelconque des revendications 3 à 13, comprenant des moyens de capteurs (121) adaptés pour détecter la présence et la longueur d'une boîte pénétrant sur ledit plan (1a, 101 a), lesdits moyens de commande étant adaptés pour commander au moins le fonctionnement de ladite bande en réponse à un signal de sortie émis par lesdits moyens de capteurs.

15. L'appareil selon l'une quelconque des revendications 4 à 14, où ledit au moins un rouleau le plus large (119) de ladite bande (112) a une partie d'extrémité axiale (119a) se projetant latéralement afin d'être apte à coopérer avec des moyens de détection palpeurs (122) agencés à proximité d'un côté d'entrée de ladite boîte au-dessus de ladite bande (112) et adaptés pour détecter le passage d'un rouleau de lissage (119), lesdits moyens de commande étant adaptés pour commander au moins le fonctionnement de ladite bande en réponse à un signal de sortie émis par lesdits moyens de détection (122).

16. L'appareil selon la revendication 15, où lesdits moyens de commande sont adaptés pour actionner ladite bande (12, 112) dès une détection positive, par lesdits moyens de détection (122), d'un passage d'un rouleau de lissage de façon que ledit rouleau de lissage (19, 119) repousse la boîte à l'arrière de la bande.

17. L'appareil selon l'une quelconque des revendications précédentes, où ledit cadre (101) comporte un système d'aspiration (124) adapté pour effectuer une aspiration à travers ledit plan (101 a), ledit système comprenant une paire de canaux (124a) s'étendant extérieurement le long des côtés du dit cadre (101).
